## Europäisches Patentamt

## European Patent Office

## Office européen des brevets

(11) Veröffentlichungsnummer: **0 275 406 B1**

(12) **EUROPÄISCHE PATENTSCHRIFT**

(45) Veröffentlichungstag der Patentschrift: **04.03.92**

(21) Anmeldenummer: **87117233.4**

(22) Anmeldetag: **23.11.87**

(51) Int. Cl.5: **H04L 7/02**

(54) **Verfahren und Anordnung zur Rückgewinnung des Taktes oder der Taktphase eines synchronen oder plesiochronen Digitalsignals.**

(30) Priorität: **27.11.86 DE 3640431**

(43) Veröffentlichungstag der Anmeldung:
**27.07.88 Patentblatt 88/30**

(45) Bekanntmachung des Hinweises auf die Patenterteilung:
**04.03.92 Patentblatt 92/10**

(84) Benannte Vertragsstaaten:
**AT BE CH DE ES FR GB GR IT LI NL SE**

(56) Entgegenhaltungen:
**DE-B- 2 641 547**
**NL-A- 8 301 625**
**US-A- 3 582 789**
**US-A- 3 731 219**

**PATENT ABSTRACTS OF JAPAN, Band 8, Nr. 223 (P-307)[1660], 12. Oktober 1984; & JP-A-59 106 019**

(73) Patentinhaber: **SIEMENS AKTIENGESELL-SCHAFT**
**Wittelsbacherplatz 2**
**W-8000 München 2(DE)**

(72) Erfinder: **Volejnik, Wilhelm, Dipl.-Ing.**
**Andreasstrasse 9**
**W-8029 Sauerlach(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Verfahren und Anordnung zur Ableitung eines Daten-Hilfstakts aus dem Takt und/oder der Taktphase eines Digitalsignals.

Die Erfindung bezieht sich auf ein Verfahren zur Ableitung eines Daten-Hilfstakts aus einem Hilfstakt und aus dem Takt oder der Taktphase eines Digitalsignals. Bei diesem Verfahren wird geprüft, ob sich die wirksamen Flanken des Digitalsignals und des Daten-Hilfstaktes auf weniger als einen definierten Zeitabstand genähert haben. In diesem Fall wird ein einzelnes Korrektursignal erzeugt und die Erzeugung weiterer Korrektursignale gesperrt. Nach Auftreten des Korrektursignals wird die Phase des Daten-Hilfstaktes durch Umpolung derart verschoben, daß der zeitliche Abstand zwischen den wirksamen Flanken des Digitalsignals und des Daten-Hilfstaktes größer als der definierte Zeitabstand ist. Nach Abschluß der Phasenkorrektur wird die Sperre gegen die Erzeugung von Korrektursignalen aufgehoben und neuerlich geprüft, ob sich die wirksamen Flanken des Digitalsignals und des Daten-Hilfstaktes wieder auf weniger als den definierten Zeitabstand genähert haben. In diesem Fall wird die Erzeugung eines einzelnen Korrektursignals, die Sperre weiterer Korrektursignale, die Verschiebung und die Prüfung wiederholt.

Dieses Verfahren ist aus der niederländischen Offenlegungsschrift NL-A-8 301 628 bekannt, die eine Einrichtung zur Synchronisation der Phase eines von einem lokalen Taktsignal abgeleiteten Taktsignals mit der eines Nachrichtensignals mit NRZ-Impulsen (Non Return to Zero) beschreibt. Obwohl das lokale Taktsignal vom gleichen Taktgeber stammt, von dem das Nachrichtensignal ursprünglich abgeleitet wurde, kann es nicht zum Eintakten des Nachrichtensignals verwendet werden, da durch Laufzeitunterschiede Phasenverschiebungen entstanden sind. Die Signale sind homochron. Die beschriebene Einrichtung dient der Rückgewinnung der Phase.

An den Eingängen von Geräten zur Übertragung oder Verarbeitung von Digitalsignalen muß der Takt aus den ankommenden Digitalsignalen rückgewonnen werden. Die Zeitschrift "telcom report", 9(1986)3, Seiten 190 - 197 zeigt beispielsweise in Bild 4 eine entsprechende Taktrückgewinnungseinrichtung TR als Block.

Die Taktfrequenz von plesiochronen Digitalsignalen entspricht einem Nominalwert mit einer geringen relativen Abweichung, deren zulässiger Maximalwert typisch in der Größenordnung von mehreren $10^{-5}$ liegt. Die Taktfrequenz von synchronen Signalen stimmt im Mittel, so weit technisch realisierbar, genau mit einem Nominalwert überein. Störeinflüsse in elektrischen Schaltkreisen und auf dem Übertragungsweg bewirken, daß die Momentanfrequenz synchroner Signale ebenfalls vom Nominalwert etwas abweicht. Außerdem stellen synchrone Signale einen Sonderfall der plesiochronen Signale dar. Hinsichtlich des Problems der Taktrückgewinnung besteht somit kein wesentlicher Unterschied zwischen den beiden Signalarten. Die Ausführungsbeispiele der Erfindung beschränken sich daher auf plesiochrone Signale.

Es ist die Aufgabe der Erfindung, ein Verfahren zur Taktrückgewinnung aus einem Digitalsignal mit NRZ- oder RZ-Impulsen (Return to Zero) und eine Anordnung zur Durchführung dieses Verfahrens anzugeben, die sich ausschließlich mit Logikschaltungen beispielsweise in Gate Arrays oder Zellen-Arrays realisieren läßt. Prüffeld-Abgleicharbeiten sollen entfallen. Die Anwendung einer kostengünstigen Halbleiter-Technologie wie CMOS soll auch bei Digitalsignalen hoher Bitrate wie 34 Mbit/s möglich sein.

Ausgehend von einem Verfahren der einleitend geschilderten Art wird diese Aufgabe erfindungsgemäß dadurch gelöst, daß die Frequenz des Hilfstaktes derart gewählt wird, daß sie ein Einoder Vielfaches (V = 1, 2, 3, ... n) des Nominalwertes der Frequenz F des plesiochronen Digitalsignals zuzüglich einer entweder positiven oder negativen Frequenzabweichung + $\Delta$ f beträgt, die größer als eine mit dem Wert des Ein- oder Vielfachen multiplizierte zulässige Frequenzabweichung + $\Delta$ F des Digitalsignals aber höchstens 10% der mit dem Ein- oder Vielfachen multiplizierten Frequenz F des Digitalsignals DS ist, daß der Hilfstakt mit einer Frequenz f im Bereich des Einfachen (V = 1) des Nominalwerts der Frequenz F des Digitalsignals unmittelbar und der Hilfstakt mit einer Frequenz f im Bereich eines Vielfachen (V = 2, 3, 4, ... n) dieses Nominalwerts nach einer Frequenzteilung mit einem Teilungsfaktor gleich dieses Vielfachen (V = 2, 3, 4, ...n) als Daten-Hilfstakt verwendet wird und daß die Sperre erste nach Abschluß einer eventuellen Frequenzteilung aufgehoben wird.

Mit diesem Daten-Hilfstakt wird das die Daten enthaltende Digitalsignal in einer der Phasenrückgewinnung dienenden nachfolgenden Schaltung auf bekannte Weise, beispielsweise mit Hilfe eines D-Flipflops, abgetaktet. Je nach verwendeter Technologie erfolgt dies mit der positiven oder negativen Flanke des Daten-Hilfstakts, die dann als wirksame Flanke bezeichnet wird. Welche der Flanken benützt wird, ist für die Erfindung ohne Belang.

Die Taktfrequenz ist gegenüber dem plesiochronen Datensignal unbekannter Frequenz stets asynchron, wodurch häufig Korrektursignale erzeugt werden, was eine leichte Glättung der Phasensprünge durch eine Phasenregelschleife ermöglicht.

Eine vorteilhafte Variante des erfindungsgemäßen Verfahrens besteht darin, daß aus dem Hilfstakt Hilfstakte abgeleitet werden, die untereinander gleiche Frequenz, jedoch verschiedene Phasenlagen haben, daß der Hilfstakt oder einer der abgeleiteten Hilfstakte mit einer Frequenz im Bereich des Einfachen des Nominalwerts der Frequenz des Digitalsignals unmittelbar und der Hilfstakt oder einer der abgeleiteten Hilfstakte mit einer Frequenz im Bereich eines Vielfachen dieses Nominalwerts nach einer Frequenzteilung mit einem Teilungsfaktor gleich dieses Vielfachen dieses Nominalwerts als Daten-Hilfstakt verwendet wird und daß die Phasenverschiebung des Daten-Hilfstakts durch Umschalten zwischen den abgeleiteten Hilfstakten und/oder durch Umpolung des Hilfstakts oder der abgeleiteten Hilfstakte erfolgt.

Vorteilhafte Anordnungen zur Durchführung des Verfahrens sind den Unteransprüchen zu entnehmen.

Anhand von Ausführungsbeispielen wird die Erfindung nachstehend näher erläutert.

Figur 1     zeigt ein Prinzipschaltbild der erfindungsgemäßen Taktrückgewinnungsschaltung,

Figur 2     zeigt eine erste erfindungsgemäße Taktrückgewinnungsschaltung,

Figur 3     zeigt einen Pulsplan für den Phasensensor in Figur 2,

Figur 4     zeigt einen Pulsplan für die Phasenkorrektureinrichtung nach Figur 2,

Figur 5     zeigt ein zweites Ausführungsbeispiel der erfindungsgemäßen Taktrückgewinnungsschaltung,

Figur 6     zeigt einen Pulsplan für die Taktrückgewinnungseinrichtung nach Figur 5,

Figur 7     zeigt ein drittes Ausführungsbeispiel der erfindungsgemäßen Taktrückgewinnungsschaltung,

Figur 8     zeigt einen Pulsplan zur Taktrückgewinnungsschaltung nach Figur 7 und

Figur 9     zeigt vier erfindungsgemäße Taktrückgewinnungseinrichtungen in einem Digitalsignal-Multiplexgerät.

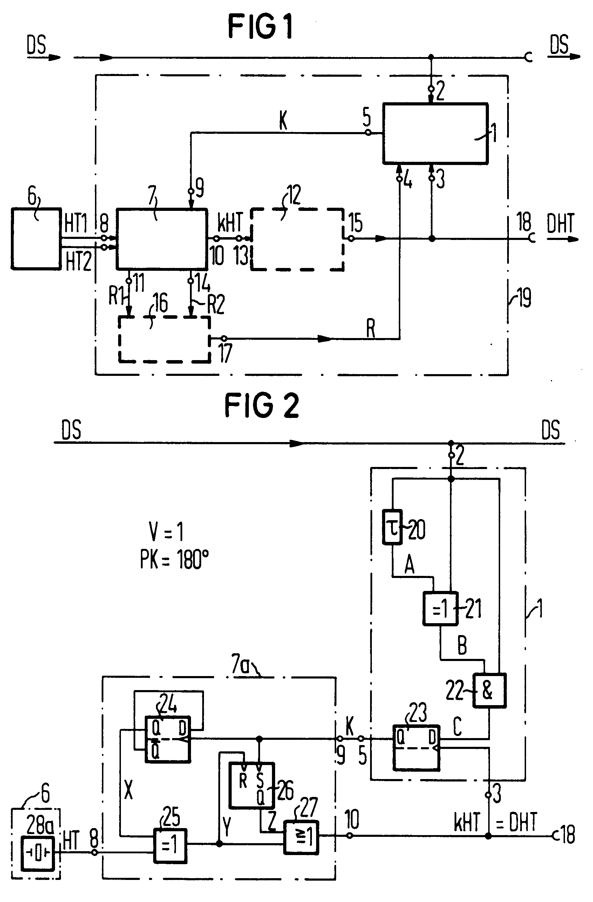

Figur 1 zeigt ein Prinzipschaltbild der erfindungsgemäßen Taktrückgewinnungseinrichtung. Es enthält einen Hilfstakterzeuger 6, eine Phasenkorrektureinrichtung 7, einen Phasensensor 1 und eventuell einen Frequenzteiler 12 und eine Rückstelleinrichtung 16.

Der Hilfstakterzeuger 6 erzeugt einen Hilfstakt HT und eventuell weitere Hilfstakte HT1,HT2,... HTn, die aus dem Hilfstakt HT abgeleitet sind und untereinander die gleiche Frequenz jedoch verschiedene Phasenlagen haben.

Die Phasenkorrektureinrichtung 7 empfängt an ihrem Eingang oder ihren Eingängen 8 den Hilfstakt HT und/oder die abgeleiteten Hilfstakte HT1,HT2,... HTn und wählt, vom Korrektursignal K am Korrektursignaleingang 9 gesteuert, einen der Hilfstakte aus bzw. polt einen um. Das Ergebnis ist ein korrigierter Hilfstakt kHT am Ausgang 10. Dieser wird je nach Dimensionierung entweder direkt an den Ausgang 18 abgegeben und dort als Daten-Hilfstakt DHT bezeichnet, oder er wird an den Eingang 13 eines Frequenzteilers 12 angelegt und erst an dessen Ausgang 15 als Daten-Hilfstakt DHT abgegeben.

Der Phasensensor 1 besteht aus einer Schaltung, deren Ausgang von einem Ruhezustand in einen Korrekturzustand wechselt, wenn sich die wirksame Flanke des Daten-Hilfstakts DHT einer Flanke das Digitalsignal DS auf weniger als einen festgesetzten Zeitabstand $\Delta t$ nähert. Da die Momentanfrequenzen vom Takt des Digitalsignals DS und vom Daten-Hilfstakt DHT etwas unterschiedlich sind, wird dieser Zustand nach einer gewissen Zeit immer eintreten.

Der Wechsel von Ruhezustand in den Korrekturzustand bewirkt eine einmalige Phasenkorrektur des korrigierten Hilfstakts kHT für den Fall, daß die gegebenenfalls durch V geteilte Hilfstaktfrequenz f langsamer als die Frequenz F des Digitalsignals DS ist, in der Weise, daß die für den nachfolgenden Frequenzteiler 12 wirksamen Taktflanken zeitlich vorverlegt werden, und für den Fall, daß die durch V geteilte Hilftaktfrequenz f schneller als die Frequenz F des Digitalsignals DS ist, in der Weise, daß die für den nachfolgenden Frequenzteiler 12 wirksamen Taktflanken zeitlich verzögert werden.

Eine Phasenkorrektur bewirkt somit, daß eine Periode des vom Frequenzteiler 12 erzeugten Daten-Hilfstakts DHT verkürzt oder verlängert wird, je nachdem, ob die Hilfstaktfrequenz f zu langsam oder zu schnell ist. Dadurch vergrößert sich der zeitliche Abstand zwischen den wirksamen Flanken des Datenhilfstakts DHT und den Flanken des Digitalsignals DS auf einen Wert größer $\Delta t$.

Bedingt durch die Frequenz-Differenz zwischen dem Takt des Digitalsignals DS und dem Daten-Hilfstakt DHT nähern sich die Flanken wieder und nach Unterschreitung des Zeitabstandes $\Delta t$ wiederholt sich der Vorgang wie oben beschrieben.

Falls die Rückstellung am Phasensensor 1 nicht automatisch erfolgt, ist auch eine Rückstelleinrichtung 16 vorgesehen, die von den Rückstellsignal-Ausgängen 11 und 14 der Phasenkorrektureinrichtung 7 nach Phasenkorrektur und Frequenzteilung Rückstellsignale R1 und R2 empfängt, die sie dann am Ausgang 17 als Rückstellsignal R an den Rückstelleingang 4 des Phasensensors 1 abgibt. Die erfindungsgemäße Anordnung ermöglicht eine digitale Taktrückgewinnung auch bei Digitalsignalen DS, deren Frequenz an die Verarbeitungsgeschwindigkeit einer verwendeten Halbleiter-Technologie heranreicht. Der Phasensensor 1, die Phasenkorrektureinrichtung 7, der Frequenzteiler 12 und die Rückstelleinrichtung 16 können als integrierte Schaltung 19 realisiert werden.

Figur 2 zeigt eine Taktrückgewinnungsschaltung nach Fig. 1 für ein Einfaches des Nominalwerts der Frequenz F des Digitalsignals DS am Eingang 2 und eine Phasenkorrektur PK = 180° durch Umpolen.

Der Phasensensor 1 enthält eine Verzögerungseinrichtung 20, ein Exklusiv-ODER-Gatter 21, ein UND-Gatter 22 und ein D-Flipflop 23.

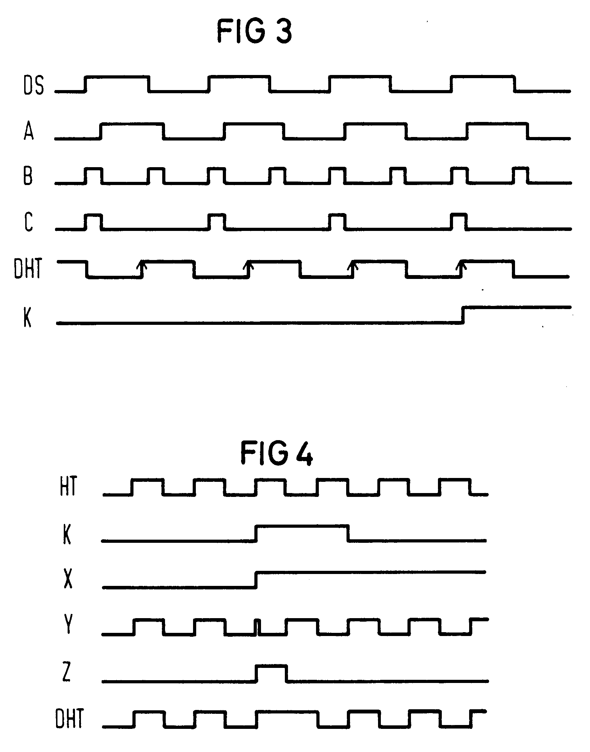

Figur 3 zeigt die Wirkungsweise des Phasensensors 1 nach Figur 2. Der oberste Puls ist das Digitalsignal DS am Eingang 2. Der zweite Puls ist mit A bezeichnet und stellt das durch das Verzögerungsglied 20 verzögerte Digitalsignal DS dar. Der dritte Puls B ist das Ausgangssignal des Exklusiv-ODER-Gatters 21, an dessen Eingänge das Digitalsignal DS und der Puls A angelegt wurden. Der vierte Puls C ist das Ergebnis der UND-Verknüpfung des Digitalsignals DS und des Pulses B im UND-Gatter 22. Der fünfte Puls ist der Daten-Hilfstakt DHT am Eingang 3. Seine wirksamen Flanken sind mit einem Pfeil gekennzeichnet. Das D-Flipflop 23 gibt an dem Q-Ausgang 5 das Korrektursignal K ab, wenn ein Impuls des Pulses C zeitlich mit einer wirksamen Flanke des Daten-Hilfstaktes DHT zusammenfällt, was der sechste Puls zeigt.

Die Phasenkorrektureinrichtung 7a in Figur 2 enthält ein D-Flipflop 24, ein Exklusiv-ODER-Gatter 25, ein RS-Flipflop 26 und ein ODER-Gatter 27.

Figur 4 zeigt die Wirkungsweise der Phasenkorrektureinrichtung 7a nach Figur 2. Der oberste Puls ist der von einem Quarzoszillator 28a im Hilfstakterzeuger 6 abgegebene Hilfstakt HT am Eingang 8 der Phasenkorrektureinrichtung 7a. Der zweite Puls ist das Korrektursignal K am Eingang 9 der Phasenkorrektureinrichtung 7a. Der dritte Puls X ist das Signal am Q-Ausgang des als Toggelstufe arbeitenden D-Flipflops 24. Der vierte Puls Y ist das Ausgangssignal des Exklusiv-ODER-Gatters 25, der fünfte Puls Z ist das Signal am Q-Ausgang des RS-Flipflops 26 und der sechste Puls der Daten-Hilfstakt DHT am Ausgang 10 der Phasenkorrektureinrichtung 7a.

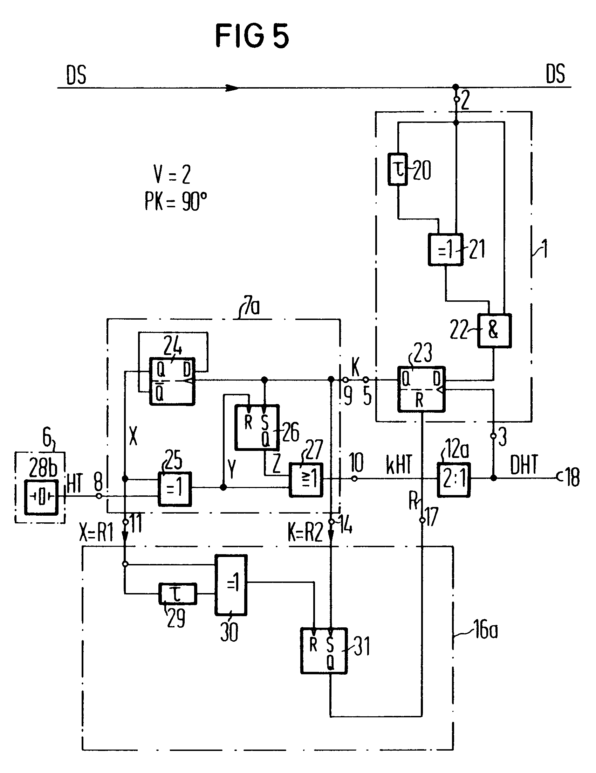

Figur 5 zeigt eine weitere Variante der erfindungsgemäßen Taktrückgewinnungsschaltung nach Figur 1 für ein Vielfaches V = 2 des Nominalwerts der Frequenz F des Digitalsignals DS und eine Phasenkorrektur PK = 90°. Die Anordnung unterscheidet sich von der nach Figur 2 durch einen Quarzoszillator 28b, der einen Hilfstakt HT der doppelten Frequenz f gegenüber der Frequenz des Hilfstaktes HT in Figur 2 abgibt. Weiter ist zusätzlich ein Frequenzteiler 12a für ein Teilungsverhältnis 2:1 dem Ausgang 10 der Phasenkorrektureinrichtung 7a nachgeschaltet. Eine Rückstelleinrichtung 16a enthält ein Verzögerungsglied 29, ein Exklusiv-ODER-Gatter 30 und ein RS-Flipflop 31.

Eine Rückstelleinrichtung 16a wird erforderlich, wenn die Laufzeiten der Flipflops und der Gatter, bezogen auf den Takt des Digitalsignals DS, nicht mehr vernachlässigbar klein sind. Wenn das D-Flipflop 23 ein Korrektursignal K an dem Q-Ausgang 5 abgibt, wird das RS-Flipflop 31 gesetzt und in weiterer Folge das D-Flipflop 23 rückgesetzt. In diesem Zustand wird das D-Flipflop 23 festgehalten, solange am Q-Ausgang des RS-Flipflops 31 der logische Zustand "H" ist. Das RS-Flipflop 31 bleibt so lange in diesem Zustand, bis als Folge des Korrektursignals K der Q-Ausgang des D-Flipflops 24 - also der Puls X - seinen Zustand wechselt. Dieser Wechsel bewirkt ein Umpolen des Pulses am Ausgang des Exklusiv-ODER-Gatters 25 und damit die gewünschte Phasenkorrektur. Nach dem Zustandswechsel des Pulses X ist somit die Phasen-Korrektur ausgeführt. Der Zustandswechsel des Pulses X bewirkt über das Laufzeitglied 29 und das Exklusiv-ODER-Gatter 30 einen Puls am R-Eingang des RS-Flipflops 31. Damit wird dieses wieder rückgesetzt und in weiterer Folge das D-Flipflop 23 freigegeben.

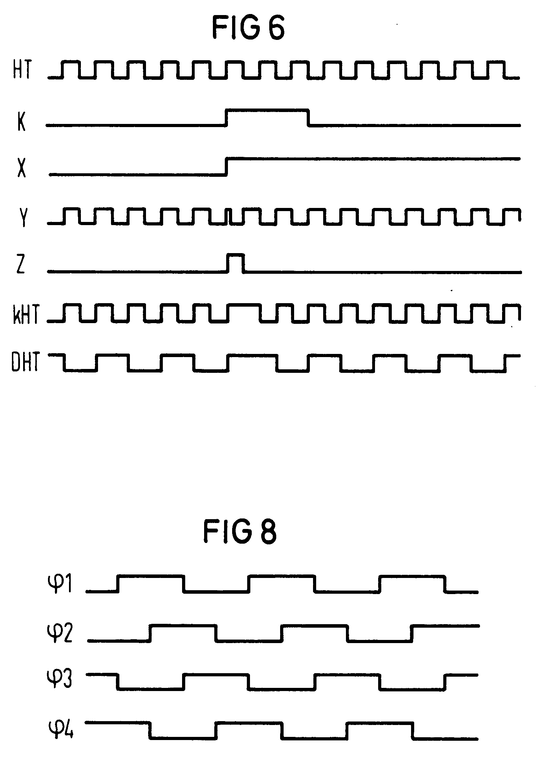

Figur 6 zeigt die Wirkungsweise der Phasenkorrektureinrichtung 7a. Die ersten sechs Pulse entsprechen denen in Figur 4, der siebte ist der Daten-Hilfspuls DHT, der sich durch Teilung im Frequenzteiler 12a aus dem korrigierten Hilfstakt kHT ergibt.

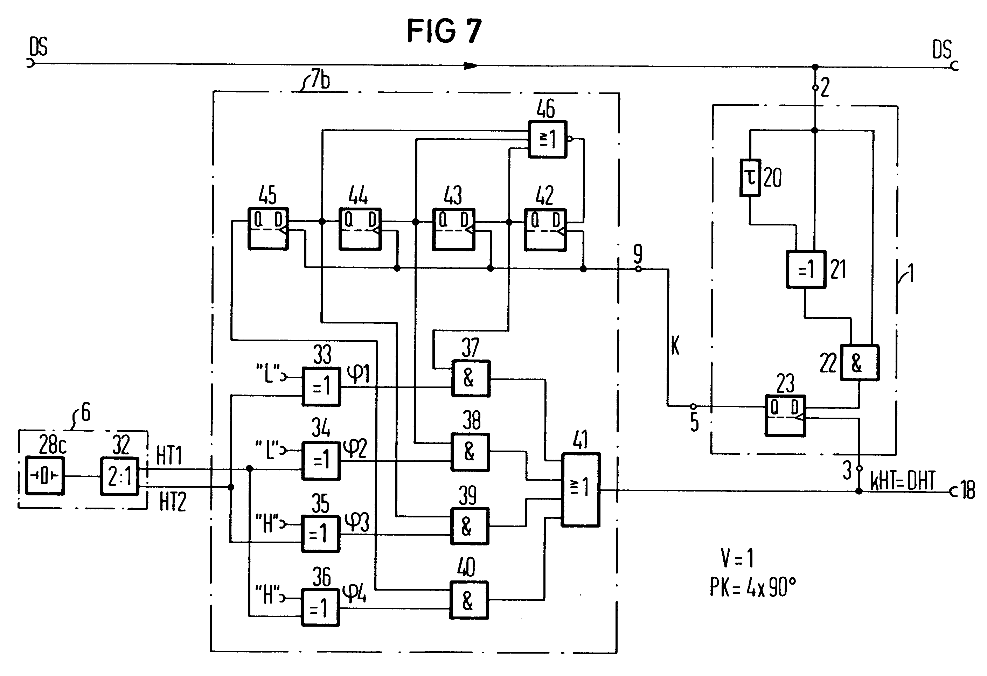

Figur 7 zeigt eine weitere Variante der erfindungsgemäßen Taktrückgewinnungseinrichtung nach Figur 1 für ein Einfaches V = 1 des Nominalwerts der Frequenz F des Digitalsignals DS und eine Phasenkorrektur PK = 4 × 90°. Die Anordnung unterscheidet sich von der nach Figur 2 durch einen anderen Hilfstakterzeuger 6 und eine andere Phasenkorrektureinrichtung 7b.

Der Hilfstakterzeuger 6 enthält einen Quarzoszillator 28c und einen nachgeschalteten Frequenzteiler 32 für ein Teilungsverhältnis 2:1, der zwei um 90° verschobene Hilfstakte HT1 und HT2 abgibt.

Die Phasenkorrektureinrichtung 7b enthält Exklusiv-ODER-Gatter 33 bis 36, UND-Gatter 37 bis 40, ein ODER-Gatter 41, D-Flipflops 42 bis 45 und ein NOR-Gatter 46.

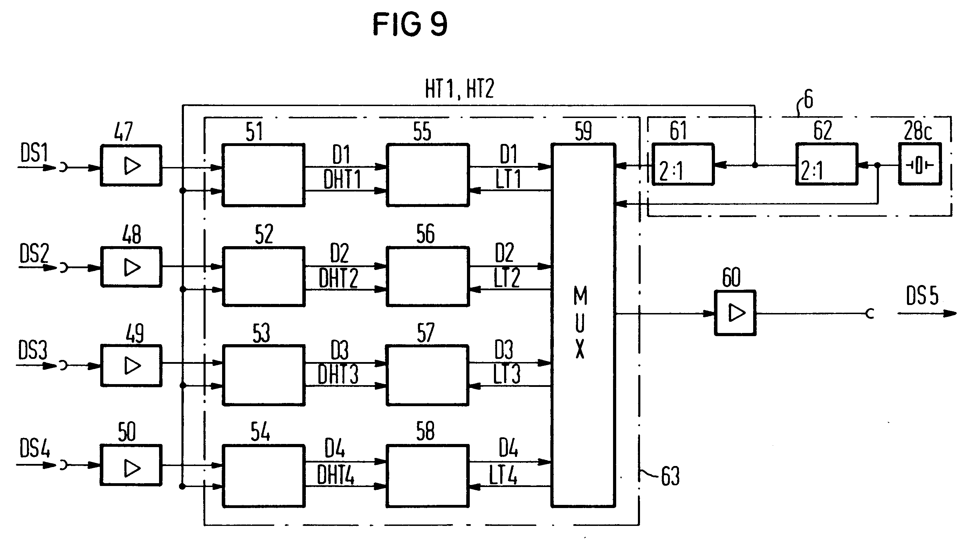

Figur 8 zeigt die Wirkungsweise der Exklusiv-ODER-Gatter 33 bis 36, die aus den Hilfstakten HT1 und HT2 bei dem dargestellten logischen Zustand am jeweils anderen Eingang vier gegeneinander um 90° verschobene Hilfstakte φ1 bis φ4 erzeugen. Jeweils einer dieser Hilfstakte φ1 bis φ4 kann durch einen ersten Eingang eines der UND-Gatter 37 bis 40 und das ODER-Gatter 41 als Daten-Hilfstakt DHT zum Ausgang 18 gegeben werden. Die D-Flipflops 42 bis 45 und das NOR-Gatter 46 wirken als Steuereinrichtung, die jeweils an einen der zweiten Eingänge der UND-Gatter 37 bis 40 einen logischen Zustand "H" anlegt.

Erscheint am Eingang 9 ein Korrektursignal K, dann geben alle D-Flipflops 42 bis 45 den logischen Zustand am D-Eingang an den Q-Ausgang weiter. Liegt an den Q-Ausgängen der D-Flipflops 42 bis 44 ein logischer Zustand "L", dann gibt das NOR-Gatter 46 an den D-Eingang des D-Flipflops 42 einen logischen Zustand "H" ab. Dieser wird mit Korrektursignalen K durch die D-Flipflops 42 bis 45 weitergeschoben, bis das NOR-Gatter 46 bei erneuten logischen Zuständen "L" wieder einen logischen Zustand "H" abgibt.

Figur 9 zeigt den Multiplexerteil eines Digitalsignal-Multiplexgeräts. Die Anordnung enthält Verstärker 47 bis 50 und 60, erfindungsgemäße Taktrückgewinnungseinrichtungen 51 bis 54 ohne Hilfstakterzeuger, Pufferspeicher 55 bis 58 einen Multiplexer 59 und einen Hilfstakterzeuger 6 mit einem Quarzoszillator 28c und Frequenzteilern 61 und 62.

Die Taktrückgewinnungseinrichtungen 51 bis 54 ohne Hilfstakterzeuger, die Pufferspeicher 55 bis 58 und der Multiplexer 59 können als integrierte Schaltung 63 zusammengefaßt werden. Die Taktrückgewinnungsschaltungen 51 bis 54 können jeweils der nach Figur 7 entsprechen, wobei jedoch nur ein einziger Hilfstakterzeuger 6 erforderlich ist.

Die Bezugszeichen D1 bis D4 bezeichnen Daten, d.h. durch die Taktrückgewinnungseinrichtung 51 bis 54 im Takt korrigierte Digitalsignale DS1 bis DS4. Mit LT1 bis LT4 sind Lesetakte und mit DS5 ist ein Digitalsignal der nächsthöheren Hierarchiestufe bezeichnet, das die Digitalsignale DS1 bis DS4 enthält.

**Patentansprüche**

1. Verfahren zur Ableitung eines Daten-Hilfstakts (DHT) aus einem Hilfstakt (HT) und aus dem Takt oder der Taktphase eines Digitalsignals (DS),
   bei dem geprüft wird, ob sich die wirksamen Flanken des Digitalsignals (DS) und des Daten-Hilfstaktes (DHT) auf weniger als einen definierten Zeitabstand ($\Delta$ t) genähert haben,
   bei dem in diesem Fall ein einzelnes Korrektursignal (K) erzeugt und die Erzeugung weiterer Korrektursignale (K) gesperrt wird,
   bei dem nach Auftreten des Korrektursignals (K) die Phase des Daten-Hilfstaktes (DHT) durch Umpolung derart verschoben wird,
   daß der zeitliche Abstand zwischen den wirksamen Flanken des Digitalsignals (DS) und des Daten-Hilfstaktes (DHT) größer als der definierte Zeitabstand ($\Delta$ t) ist,
   bei dem nach Abschluß der Phasenkorrektur die Sperre gegen die Erzeugung von Korrektursignalen (K) aufgehoben und neuerlich geprüft wird, ob sich die wirksamen Flanken des Digitalsignals (DS) und des Datenhilfstaktes (DHT) wieder auf weniger als den definierten Zeitabstand ($\Delta$ t) genähert haben, und
bei dem in diesem Fall die Erzeugung eines einzelnen Korrektursignals (K), die Sperre weiterer Korrektursignale, die Verschiebung und die Prüfung wiederholt werden,
**dadurch gekennzeichnet,**
daß die Frequenz (f) des Hilfstakts (HT) derart gewählt wird, das sie ein Ein- oder Vielfaches (V = 1, 2, 3, ... n) des Nominalwerts der Frequenz (F) des plesiochronen Digitalsignals (DS) zuzüglich einer entweder positiven oder negativen Frequenzabweichung ($\pm \Delta$ f) beträgt, die größer als eine mit dem Wert des Ein- oder Vielfachen (V) multiplizierte zulässige Frequenzabweichung ($\pm \Delta$ F) des Digitalsignals (DS) aber höchstens 10% der mit dem Ein- oder Vielfachen (V) multiplizierten Frequenz (F) des Digitalsignals (DS) ist,
daß der Hilfstakt (HT) mit einer Frequenz (f) im Bereich des Einfachen (V = 1) des Nominalwerts der Frequenz (F) des Digitalsignals (DS) unmittelbar und der Hilfstakt (HT) mit einer Frequenz (f) im Bereich eines Vielfachen (V = 2, 3, 4, ... n) dieses Nominalwerts nach einer Frequenzteilung mit einem Teilungsfaktor gleich dieses Vielfachen (V = 2, 3, 4, ... n) als Daten-Hilfstakt (DHT) verwendet wird und
daß die Sperre erst nach Abschluß einer eventuellen Frequenzteilung aufgehoben wird.

2. Verfahren nach Anspruch 1,
   **dadurch gekennzeichnet,**
   daß aus dem Hilfstakt (HT) Hilfstakte (HT1,HT2,... HTn) abgeleitet werden, die untereinander gleiche Frequenz, jedoch verschiedene Phasenlagen haben,
   daß der Hilfstakt (HT) oder einer der abgeleiteten Hilfstakte (HT1,HT2,... HTn) mit einer Frequenz (f) im Bereich des Einfachen (V = 1) des Nominalwerts der Frequenz (F) des Digitalsignals (DS) unmittelbar und der Hilfstakt (HT) oder einer der abgeleiteten Hilfstakte (HT1,HT2,... HTn) mit einer Frequenz (f) im Bereich eines Vielfachen (V = 2,3,4,...n) dieses Nominalwerts nach einer Frequenzteilung mit einem Teilungsfaktor gleich dieses Vielfachen (V = 2,3,4,...n) als Daten-Hilfstakt (DHT) verwendet wird und
   daß die Phasenverschiebung des Daten-Hilfstakts (DHT) durch Umschalten zwischen den abgeleiteten Hilfstakten (HT1,HT2,... HTn) und/oder durch Umpolung des Hilfstakts (HT) oder der abgeleiteten Hilfstakte (HT1,HT2,... HTn) erfolgt.

3. Anordnung zur Durchführung des Verfahrens nach Anspruch 1 oder 2
mit einem Hilfstakt-Erzeuger (6),
mit einer dem Hilfstakt-Erzeuger (6) nachgeschaltete Phasenkorrektureinrichtung (7,7a), die einen korrigierten Hilfstakt (kHT) als Daten-Hilfstakt (DHT) abgibt, und
mit einem Phasensensor (1), an dessen Eingänge das Digitalsignal (DS) und der Daten-Hilfstakt (DHT) angelegt werden und dessen Ausgang ein Korrektursignal (K) an die Phasenkorrektureinrichtung (7,7a) abgibt,
**dadurch gekennzeichnet,**
daß der Hilfstakt-Erzeuger (6) für eine Frequenz (f) des Hilfstakts (HT) ausgelegt ist, die ein Ein- oder Vielfaches (V = 1, 2, 3, ... n) des Nominalwerts der Frequenz (F) des Digitalsignals (DS) zuzüglich einer entweder positiven oder negativen Frequenzabweichung ($\pm \Delta f$) beträgt, die größer als eine mit dem Wert Ein-oder Vielfachen (V) multipliziert zulässige Fre-quenzabweichung ($\pm \Delta F$) des Digitalsignals (DS) aber höchstens 10% der mit dem Ein-oder Vielfachen (V) multiplizierten Frequenz (F) des Digitalsignals (DS) ist.

4. Anordnung nach Anspruch 3,
   **dadurch gekennzeichnet,**
   daß der Phasenkorrektureinrichtung (7,7a) ein Frequenzteiler (12,12a) nachgeschaltet ist, dessen Ausgang erst den Daten-Hilfstakt (DHT) abgibt.

5. Anordnung nach Anspruch 3 oder 4 ohne automatische Phasensensorrückstellung,
   **dadurch gekennzeichnet,**
   daß eine Rückstelleinrichtung (16) vorgesehen ist, deren Eingänge mit der Phasenkorrektureinrichtung (7) und dem Frequenzteiler (12) und deren Ausgang mit einem Rückstelleingang (4) des Phasensensors (1) verbunden sind.

6. Anordnung nach Anspruch 3,
   **dadurch gekennzeichnet,**
   daß als Phasenkorrektureinrichtung (7a) ein erstes Exklusiv-ODER-Gatter (25), dessen erster Eingang mit dem Ausgang des Hilfstakt-Erzeuger (6) und dessen zweiter Eingang über eine Toggelstufe (24) mit dem Ausgang (5) des Phasensensors (1) verbunden sind, ein ODER-Gatter (27), dessen einer Eingang mit dem Ausgang des ersten Exklusiv-ODER-Gatters (25) verbunden ist und dessen Ausgang (10) den korrigierten Hilfstakt (kHT) abgibt, und ein RS-Flipflop (26) vorgesehen sind, dessen R-Eingang mit dem Ausgang des ersten Exklusiv-ODER-Gatters (25), dessen S-Eingang mit dem Eingang der Toggelstufe (24) und dessen Q-Ausgang mit dem anderen Eingang des ODER-Gatters (27) verbunden sind.

7. Anordnung nach Anspruch 3,
   **dadurch gekennzeichnet,**
   daß in der Phasenkorrektureinrichtung (7b) ein zweites bis fünftes Exklusiv-ODER-Gatter (33-36), von denen jeweils ein Paar mit ihren ersten Eingängen mit einem der Hilfstakte (HT1,HT2) beaufschlagt sind, während an die zweiten Eingänge eines Paares einmal ein Logischer Zustand "H" und einmal ein logischer Zustand "L" anliegt, ein erstes bis viertes UND-Gatter (37-40), deren erste Eingänge jeweils mit dem Ausgang eines dieser Exklusiv-ODER-Gatter (33-36) und deren zweite Eingänge mit einer Steuereinrichtung (42-46) verbunden sind, und ein ODER-Gatter (41) vorgesehen sind, dessen Eingänge jeweils mit einem Ausgang des ersten bis vierten UND-Gatters (37-40) verbunden sind und dessen Ausgang den korrigierten Hilfstakt (kHT) abgibt.

8. Anordnung nach Anspruch 7,
   **dadurch gekennzeichnet,**
   daß die Steuereinrichtung (42-46) aus einer Kette aus einem zweiten bis fünften D-Flipflop (42-45) besteht, deren Q-Ausgänge jeweils mit den zweiten Eingängen des ersten bis vierten UND-Gatters (37-40), deren erste drei Q-Ausgänge jeweils zusätzlich mit einem Eingang eines NOR-Gatters (46), deren erster D-Eingang mit dem Ausgang dieses NOR-Gatters (46) und deren Takteingänge mit dem Ausgang (5) des Phasensensors (1) verbunden sind.

9. Anordnung nach Anspruch 3,
   **dadurch gekennzeichnet,**
   daß im Phasensensor (1) ein Verzögerungsglied (20), dessen Eingang mit dem Eingang (2) für das Digitalsignal (DS) verbunden ist, ein sechstes Exklusiv-ODER-Gatter (21), dessen einer Eingang mit dem Ausgang des Verzögerungsgliedes (20) und dessen anderer Eingang mit dem Eingang (2) für das Digitalsignal (DS) verbunden ist, ein fünftes UND-Gatter (22), dessen erster Eingang mit dem Ausgang des sechsten Exklusiv-ODER-Gatters (21) und dessen zweiter Eingang mit dem Eingang (2) für das Digitalsignal (DS) verbunden sind, und ein sechstes D-Flipflop (23) vorgesehen sind, dessen D-Eingang mit dem Ausgang des fünften UND-Gatters (22), dessen Takteingang mit dem Eingang (3) für den Daten-Hilfstakt (DHT) und dessen Q-Ausgang mit dem Ausgang (5) des Phasensensors (1) verbunden sind.

10. Anordnung nach Anspruch 3,
**dadurch gekennzeichnet,**
daß die Phasenkorrektureinrichtung (7), der Phasensensor (1) und soweit benötigt der Frequenzteiler (12) und die Rückstelleinrichtung (16) oder die Phasenkorrektureinrichtungen (7), die Phasensensoren (1) und soweit benötigt die Frequenzteiler (12) und die Rückstelleinrichtungen (16) zur Ableitung mehrerer Daten-Hilfstakte (DHT) in einem Digitalsignal-Multiplexgerät (DSMX) oder -Verteilermultiplexer sowie dessen Pufferspeicher (55-58) und Multiplexer (59) zu einer integrierten Schaltung (19,63) zusammengefaßt sind und
daß der in diesen Geräten benötigte Master-Oszillator auch als Hilfstakterzeuger (6) mitverwendet wird.

**Claims**

1. Method for extracting an auxiliary data clock (DHT) from an auxiliary clock (HT) and from the clock or the clock phase of a digital signal (DS),
in which a check is made as to whether the active edges of the digital signal (DS) and of the auxiliary data clock (DHT) have approached each other to less than a defined time interval ($\Delta t$),
in which in this case a single correction signal (K) is generated and the generation of further correction signals (K) is inhibited,
in which, after the occurrence of the correction signal (K), the phase of the auxiliary data clock (DHT) is shifted by polarity reversal in such a way that the time interval between the active edges of the data signal (DS) and of the auxiliary data clock (DHT) is greater than the defined time interval ($\Delta t$),
in which, after the conclusion of the phase correction, the inhibition preventing the generation of correction signals (K) is cancelled and a new check is made as to whether the active edges of the digital signal (DS) and of the auxiliary data clock (DHT) have again approached each other to less than the defined time interval ($\Delta t$), and
in which in this case the generation of a single correction signal (K), the inhibition of further correction signals, the shifting and the checking are repeated,
characterised in that the frequency (f) of the auxiliary clock (HT) is selected in such a way that it represents a single or multiple factor (V = 1, 2, 3, ... n) of the nominal value of the frequency (F) of the plesiochronous digital signal (DS) with the addition of either a positive or negative frequency deviation ($\pm\Delta f$) which is greater than a permissible frequency deviation ($\pm\Delta F$), multiplied by the value of the single or multiple factor (V), of the digital signal (DS), but is at most 10% of the frequency (F), multiplied by the single or multiple factor (V), of the digital signal (DS), in that the auxiliary clock (HT) having a frequency (F) in the range of the single factor (V = 1) of the nominal value of the frequency (F) of the digital signal (DS) is used directly as auxiliary data clock (DHT), and the auxiliary clock (HT) having a frequency (f) in the range of a multiple factor (V = 2, 3, 4, ... n) of said nominal value is used as auxiliary data clock (DHT) after a frequency division with a division factor equal to said multiple factor (V = 2, 3, 4, ... n), and in that the inhibition is cancelled only after completion of any frequency division.

2. Method according to Claim 1, characterised in that auxiliary clocks (HT1, HT2, ... HTn) which have the same frequency as one another but have different phase relationships are extracted from the auxiliary clock (HT), in that the auxiliary clock (HT) or one of the extracted auxiliary clocks (HT1, HT2, ... HTn) having a frequency (f) in the range of the single factor (V = 1) of the nominal value of the frequency (F) of the digital signal (DS) is used directly as auxiliary data clock (DHT), and the auxiliary clock (HT) or one of the extracted auxiliary clocks (HT1, HT2, ... HTn) having a frequency (f) in the range of a multiple factor (V = 2, 3, 4, ... n) of said nominal value is used as auxiliary data clock (DHT) after a frequency division with a division factor equal to said multiple factor (V = 2, 3, 4, ... n), and in that the phase shifting of the auxiliary data clock (DHT) is effected by switching over between the extracted auxiliary clocks (HT1, HT2, ... HTn) and/or by reversing the polarity of the auxiliary clock (HT) or of the extracted auxiliary clocks (HT1, HT2, ... HTn).

3. Arrangement for carrying out the method according to Claim 1 or 2,
having an auxiliary clock generator (6),
having a phase correction device (7, 7a) which is connected downstream of the auxiliary clock generator (6) and which outputs a corrected auxiliary clock (kHT) as auxiliary data clock (DHT), and
having a phase sensor (1), to the inputs of which the digital signal (DS) and the auxiliary data clock (DHT) are applied, and the output of which outputs a correction signal (K) to the phase correction device (7, 7a),
characterised in that the auxiliary clock generator (6) is designed for a frequency (f) of the auxiliary clock (HT) which represents a single or multiple factor (V = 1, 2, 3, ... n) of the nominal value of the frequency (F) of the digital signal (DS) with the addition of either a positive or negative frequency deviation ($\pm\Delta f$) which is greater than a permissible frequency deviation ($\pm\Delta F$), multiplied by the value of the single or multiple factor (V), of the digital signal (DS), but is at most 10% of the frequency (F), multiplied by the single or multiple factor (V), of the digital signal (DS).

4. Arrangement according to Claim 3, characterised in that connected downstream of the phase correction device (7, 7a) is a frequency divider (12, 12a), the output of which only then outputs the auxiliary data clock (DHT).

5. Arrangement according to Claim 3 or 4 without automatic phase sensor resetting, characterised in that a resetting device (16) is provided, the inputs of which are connected to the phase correction device (7) and the frequency divider (12), and the output of which is connected to a reset input (4) of the phase sensor (1).

6. Arrangement according to Claim 3, characterised in that there are provided as phase correction device (7a) a first exclusive-OR gate (25), the first input of which is connected to the output of the auxiliary clock generator (6) and the second input of which is connected via a toggle stage (24) to the output (5) of the phase sensor (1), an OR gate (27), one input of which is connected to the output of the first exclusive-OR gate (25) and the output (10) of which outputs the corrected auxiliary clock (kHT), and an RS flip-flop (26), the R input of which is connected to the output of the first exclusive-OR gate (25), the S input of which is connected to the input of the toggle stage (24), and the Q output of which is connected to the other input of the OR gate (27).

7. Arrangement according to Claim 3, characterised in that there are provided in the phase correction device (7b) a second to fifth exclusive-OR gate (33-36), one pair of which in each case receives with their first inputs one of the auxiliary clocks (HT1, HT2), while once a logic state "H" and once a logic state "L" is present at the second inputs of a pair, a first to fourth AND gate (37-40), the first inputs of which are in each case connected to the output of one of these exclusive-OR gates (33-36) and the second inputs of which are connected to a control device (42-46), and an OR gate (41), the inputs of which are connected in each case to one output of the first to fourth AND gate (37-40) and the output of which outputs the corrected auxiliary clock (kHT).

8. Arrangement according to Claim 7, characterised in that the control device (42-46) consists of a chain comprising a second to fifth D-type flip-flop (42-45), the Q outputs of which are in each case connected to the second inputs of the first to fourth AND gate (37-40), the first three Q outputs of which are in each case additionally connected to an input of a NOR gate (46), the first D input of which is connected to the output of said NOR gate (46), and the clock inputs of which are connected to the output (5) of the phase sensor (1).

9. Arrangement according to Claim 3, characterised in that there are provided in the phase sensor (1) a delay element (20), the input of which is connected to the input (2) for the digital signal (DS), a sixth exclusive-OR gate (21), one input of which is connected to the output of the delay element (20) and the other input of which is connected to the input (2) for the digital signal (DS), a fifth AND gate (22), the first input of which is connected to the output of the sixth exclusive-OR gate (21) and the second input of which is connected to the input (2) for the digital signal (DS), and a sixth D-type flip-flop (23), the D input of which is connected to the output of the fifth AND gate (22), the clock input of which is connected to the input (3) for the auxiliary data clock (DHT), and the Q output of which is connected to the output (5) of the phase sensor (1).

10. Arrangement according to Claim 3, characterised in that the phase correction device (7), the phase sensor (1), and where required the frequency divider (12) and the resetting device (16) or the phase correction devices (7), the phase sensors (1), and where required the frequency dividers (12) and the resetting devices (16) for extracting a plurality of auxiliary data clocks (DHT) in a digital signal multiplex device (DSMX) or distribution multiplexer as well as their buffer memories (55-58) and multiplexer (59) are combined to form an integrated circuit (19, 63), and in that the master oscillator required in these devices is also used as auxiliary clock generator (6).

**Revendications**

1. Procédé pour dériver une cadence auxiliaire de données (DHT) à partir d'une cadence auxiliaire (HT) et à partir de la cadence ou de la phase de la cadence d'un signal numérique (DS),

dans lequel on vérifie si les flancs actifs du signal numérique (DS) et du signal auxiliaire de données (DHT) se sont rapprochés à moins d'un intervalle de temps défini (Δt),

dans lequel, dans ce cas, un signal individuel de correction (K) est produit et la délivrance d'autres signaux de correction (K) est bloquée,

dans lequel, après l'apparition du signal de correction (K), la phase de la cadence auxiliaire de données (DHT) est décalée par inversion de polarité de telle sorte que l'intervalle de temps entre les flancs actifs du signal numérique (DS) et de la cadence auxiliaire de données (DHT) est supérieure à l'intervalle de temps défini (Δt),

dans lequel, une fois terminée la correction de phase, le blocage vis-à-vis de la production de signaux de correction (K) est supprimé et une vérification est à nouveau effectuée pour savoir si les flancs actifs du signal numérique (DS) et du signal de cadence auxiliaire (DHT) se sont à nouveau rapprochés en étant séparés par un intervalle de temps inférieur à l'intervalle de temps défini (Δt), et

dans lequel, dans ce cas, la production d'un signal individuel de correction (K), le blocage de signaux ultérieurs de correction, le décalage et le contrôle sont répétés, caractérisé par le fait

que la fréquence (f) de la cadence auxiliaire (HT) est choisie de manière à être égale à une fois ou à un multiple (V = 1, 2, 3, ... n) de la valeur nominale de la fréquence (F) du signal numérique plésiochrone (DS) plus un écart de fréquence positif ou négatif (±Δf), qui est supérieur à un écart de fréquence admissible (±ΔF) du signal de données (DS), multiplié par la valeur nominale ou par un multiple (V) de cette valeur, mais tout au plus égal à 10 % de la fréquence (F) du signal numérique (DS), multipliée par la valeur nominale ou un multiple (V) de cette valeur,

que la cadence auxiliaire (HT) possédant une fréquence (f) voisine d'une fois (V = 1) la valeur nominale de la fréquence (F) du signal numérique (DS) est utilisée directement en tant que cadence auxiliaire de données (DHT) et la cadence auxiliaire (HT) possédant une fréquence (f) voisine d'un multiple (V = 2, 3, 4, ... n) de cette valeur nominale est utilisée en tant que cadence auxiliaire de données (DHT) après division de la fréquence par un facteur de division égal à ce multiple (V = 2, 3, 4,... n), et que le blocage est supprimé uniquement après la fin d'une éventuelle division de la fréquence.

**2.** Procédé suivant la revendication 1, caractérisé par le fait

qu'à partir de la cadence auxiliaire (HT) sont formées les cadences auxiliaires (HT1,HT2,...HTn), qui possèdent la même fréquence, mais ont des positions de phase différentes,

que la cadence auxiliaire (HT) ou l'une des cadences auxiliaires dérivées (HT1,HT2...HTn) possédant une fréquence (f) voisine de une fois (V = 1) la valeur nominale de la fréquence (F) du signal numérique (DS) est utilisée directement en tant que cadence auxiliaire de données (DHT), et la cadence auxiliaire (HT) ou l'une des cadences auxiliaires dérivées (HT1,HT2, ... HTn) possédant une fréquence (f) voisine d'un multiple (V = 2, 3, 4,... n) de cette valeur nominale est utilisée en tant que cadence auxiliaire de données (DHT) après division de fréquence par un facteur de division égal à ce multiple (V = 2, 3, 4, ... n), et

que le déphasage de la cadence auxiliaire de données (DHT) est réalisé par commutation entre les cadences auxiliaires dérivées (HT1,HT2,... HTn) et/ou par inversion de polarité de la cadence auxiliaire (HT) ou des cadences auxiliaires dérivées (HT1,HT2,...HTn).

**3.** Dispositif pour la mise en oeuvre du procédé suivant la revendication 1 ou 2, comportant

un générateur de cadence auxiliaire (6),

un dispositif de correction de phase (7,7a) branché en aval du générateur de cadence auxiliaire (6) et qui délivre une cadence auxiliaire corrigée (kHT) en tant que cadence auxiliaire de données (DHT), et

un détecteur de phase (1), aux entrées duquel sont appliqués le signal numérique (DS) et le signal de cadence auxiliaire de données (DHT) et dont la sortie délivre un signal de correction (K) au dispositif de correction de phase (7,7a), caractérisé par le fait

que le générateur de cadence auxiliaire (6) est conçu pour une fréquence (f) de la cadence auxiliaire (HT), qui est égale à une fois ou à un multiple (V = 1, 2, 3, ...n) de la valeur nominale de la fréquence (F) du signal numérique (DS) plus un écart de fréquence positif ou négatif (±Δf), qui est supérieur à un écart de fréquence admissible (±ΔF) du signal numérique (DS), multiplié par une fois ou un multiple (V) de la valeur nominale, mais égal tout au plus à 10 % de la fréquence (F) du signal numérique (DS), multipliée par une fois ou le multiple (V) de la valeur nominale.

**4.** Dispositif suivant la revendication 3, caractérisé par le fait que le dispositif de correction de phase (7,7a) est branché en aval d'un diviseur de fréquence (12,12a), dont la sortie délivre uniquement la cadence auxiliaire donnée (DHT).

5. Dispositif suivant la revendication 3 ou 4 sans remise à zéro automatique du détecteur de phase, caractérisé par le fait qu'il est prévu un dispositif de remise à zéro (16), dont les entrées sont raccordées au dispositif de correction de phase (7) et au diviseur de fréquence (12) et dont la sortie est raccordée à une entrée de remise à zéro (4) du détecteur de phase (1).

6. Dispositif suivant la revendication 3, caractérisé par le fait qu'il est prévu, comme dispositif de correction de phase (7a), une première porte OU-Exclusif (25), dont la première entrée est raccordée à la sortie du générateur de cadence auxiliaire (6) et dont la seconde entrée est raccordée par l'intermédiaire d'un étage à bascule (24) à la sortie (5) du détecteur de phase (1), une porte OU (27), dont une entrée est raccordée à la sortie de la première porte OU-Exclusif (25) et dont la sortie (10) délivre la cadence auxiliaire corrigée (kHT), et une bascule bistable de type RS (26), dont l'entrée R est raccordée à la sortie de la première porte OU-Exclusif (25), dont l'entrée S est raccordée à l'entrée de l'étage à bascule (24) et dont la sortie Q est raccordée à l'autre entrée de la porte OU (27).

7. Dispositif suivant la revendication 3, caractérisé par le fait que dans le dispositif de correction de phase (7b), il est prévu des seconde, troisième, quatrième et cinquième portes OU-Exclusif (33-36), dont respectivement un couple est chargé, au niveau de ses premières entrées, par l'une des cadences auxiliaires (HT1,HT2), tandis qu'aux secondes entrées d'un couple sont appliqués une fois un état logique "H" et une autre fois un état logique "L", des première, seconde, troisième et quatrième portes ET (37-40), dont les premières entrées sont raccordées respectivement à la sortie de l'une de ces portes OU-Exclusif (33-36) et dont les secondes entrées sont raccordées à un dispositif de commande (42-46), et une porte OU (41), dont les entrées sont raccordées respectivement à la sortie des première, seconde, troisième et quatrième portes ET (37-40) et dont la sortie délivre la cadence auxiliaire corrigée (kHT).

8. Dispositif suivant la revendication 7, caractérisé par le fait que le dispositif de commande (42-46) est constitué par une chaîne formée de seconde, troisième, quatrième et cinquième bascules bistables de type D (42-45), dont les sorties Q sont raccordées respectivement aux secondes entrées des première, seconde, troisième et quatrième portes ET (37-40), dont les trois premières sorties Q sont raccordées en outre à l'entrée d'une porte NON-ET (46), dont la première entrée D est raccordée à la sortie de cette porte NON-ET (46) et dont les entrées de cadence sont raccordées à la sortie (5) du détecteur de phase (1).

9. Dispositif suivant la revendication 3, caractérisé par le fait que dans le détecteur de phase (1), il est prévu un circuit de retardement (20), dont l'entrée est raccordée à l'entrée (2) prévue pour le signal numérique (DS), une sixième porte OU-Exclusif (21), dont une entrée est raccordée à la sortie du circuit de retardement (20) et dont l'autre entrée est raccordée à l'entrée (2) pour le signal numérique (DS), une cinquième porte ET (22), dont la première entrée est raccordée à la sortie de la sixième porte OU-Exclusif (21) et dont la seconde entrée est raccordée à l'entrée (2) pour le signal numérique (DS), et une sixième bascule bistable de type D (23), dont l'entrée D est raccordée à la sortie de la cinquième porte ET (22), dont l'entrée de cadence est raccordée à l'entrée (3) prévue pour la cadence auxiliaire de données (DH), dont la sortie Q est raccordée à la sortie (5) du détecteur de phase (1).

10. Dispositif suivant la revendication 3, caractérisé par le fait que le dispositif de correction de phase (7), le détecteur de phase (1) et, dans la mesure où cela est nécessaire, le diviseur de fréquence (12) et le circuit de remise à zéro (16) ou les dispositifs de correction de phase (7), les détecteurs de phase (1) et, dans la mesure où cela est nécessaire, les diviseurs de fréquence (12) et les dispositifs de remise à zéro (16) pour l'obtention de plusieurs cadences auxiliaires de données (DHT) dans un appareil (DSMX) de multiplexage de signaux numériques ou dans un multiplexeur de distribution de signaux numériques et sa mémoire tampon (55-58) et son multiplexeur (59), sont réunis pour former un circuit intégré (19,63), et que l'oscillateur maître nécessaire dans ces appareils est également utilisé conjointement en tant que générateur de cadence auxiliaire (6).

# FIG 1

# FIG 2

V = 1
PK = 180°

# FIG 3

# FIG 4

# FIG 5

# FIG 6

HT

K

X

Y

Z

kHT

DHT

# FIG 8

φ1

φ2

φ3

φ4

FIG 7

V = 1
PK = 4 × 90°

**FIG 9**